Europäisches Patentamt

European Patent Office

Office européen des brevets

(11) Veröffentlichungsnummer: **0 183 897**
**B1**

## (12) EUROPÄISCHE PATENTSCHRIFT

(45) Veröffentlichungstag der Patentschrift:
**26.10.88**

(21) Anmeldenummer: **85102509.8**

(22) Anmeldetag: **06.03.85**

(51) Int. Cl.⁴: **F 16 J 15/32**

---

(54) **Radialwellendichtring.**

---

(30) Priorität: **08.11.84 DE 3440797**

(43) Veröffentlichungstag der Anmeldung:
**11.06.86 Patentblatt 86/24**

(45) Bekanntmachung des Hinweises auf die Patenterteilung:
**26.10.88 Patentblatt 88/43**

(84) Benannte Vertragsstaaten:
**AT BE DE FR GB IT NL SE**

(56) Entgegenhaltungen:
**EP - A - 0 033 963**
**EP - A - 0 130 237**
**DE - A - 1 525 882**
**DE - A - 3 234 430**
**GB - A - 2 040 009**
**US - A - 3 501 155**

(73) Patentinhaber: **Firma Carl Freudenberg, Höhnerweg 4,**
**D-6940 Weinheim/Bergstrasse (DE)**

(72) Erfinder: **Schmitt, Wolfgang, Alexanderstrasse 53,**
**D-6806 Viernheim (DE)**
Erfinder: **Forch, Hans, Sandbuckelgasse 29,**
**D-6943 Birkenau (DE)**

(74) Vertreter: **Weissenfeld-Richters, Helga, Dr.,**
**Höhnerweg 2, D-6940 Weinheim/Bergstrasse (DE)**

---

# Beschreibung

Die Erfindung betrifft einen Radialwellendichtring, umfassend eine ringförmige Dichtlippe aus polymerem Werkstoff, die mit einer umlaufenden Dichtleiste federnd an der Welle anliegt, hydrodynamisch wirkende Rückförderrippen auf der druckabgewandten Seite der Dichtleiste und einen innenseitig zylindrisch begrenzten Ringvorsprung auf der dem abgedichteten Medium zugewandten Seite sowie einen radialen Abstand zwischen der Innenseite des Ringvorsprunges und der Welle, wobei der Ringvorsprung biegesteif mit der Dichtleiste verbunden ist, wobei aus der Innenseite des Ringvorsprunges gleichmässig auf dem Umfang verteilte Staurippen mit Anströmflächen für das abgedichtete Medium vorspringen und wobei die Anströmflächen, quer zur Rotationsachse der Welle betrachtet, einen spitzen Winkel mit der Mantelfläche einschliessen.

Auf einen Radialwellendichtring der vorgenannten Art nimmt die US-A-3 913 925 Bezug. Die Anströmflächen der Staurippen schliessen dabei mit der Rotationsachse der abgedichteten Welle einen spitzen Winkel ein. Abgedichtetes Medium wird dadurch bei einer Drehung der abgedichteten Welle stets in Richtung des abgedichteten Raumes axial zurückgefördert. Dabei muss es indessen vor Verlassen des Radialwellendichtringes eine Dichtleiste überwinden, die bei Wellenstillstand ebenso wie die Staurippen an der Oberfläche der abgedichteten Welle anliegt.

Der Vorgang setzt daher ein Abheben sowohl der Drallrippen als auch der Dichtleiste von der Oberfläche der abgedichteten Welle voraus, was bei der beschriebenen Ausführung dazu genutzt wird, unter normalen Betriebsbedingungen, d.h. bei sich drehender Welle, eine verschleisslose Abdichtung zu erzielen. Voraussetzung hierfür ist es allerdings, dass die Zwischenräume der Staurippen durch niederdruckseitig einmündende Bohrungen mit dem das abgedichtete Medium enthaltenden Raum verbunden sind. Die Erzeugung solcher Bohrungen ist technisch aufwendig. Sie verteuert entsprechende Radialwellendichtringe ebenso wie die Erzeugung der ausserhalb der Bohrungen nur in radialer Richtung nach innen geöffneten Zwischenräume der Staurippen.

Der Erfindung liegt die Aufgabe zugrunde, einen Radialwellendichtring zu zeigen, der sich bei minimalem Verschleiss durch ein gutes Abdichtungsergebnis bei stillstehender und sich drehender Welle auszeichnet und der sich wesentlich preiswerter erzeugen lässt als die vorstehend beschriebene Ausführung.

Diese Aufgabe wird erfindungsgemäss dadurch gelöst, dass die Anströmflächen der Staurippen sich, in Richtung der Welle betrachtet, parallel zu dieser erstrecken und frei von Hinterschneidungen sind und dass der radiale Abstand des Ringvorsprunges von der Welle etwa 0,1 bis 0,5 mm beträgt. Die Staurippen lassen sich dadurch äusserst leicht erzeugen.

Der Bereich, in dem die Staurippen angeordnet sind und der Bereich, in dem die Dichtleiste angeordnet ist, müssen biegesteif verbunden sein. Diese Bedingung lässt sich durch eine entsprechend grosse Auslegung des Querschnittes leicht erfüllen.

Der genannte Gesamtbereich kann gegebenenfalls durch ein membranartiges Übergangsstück mit dem zugehörigen Gehäuse des Radialwellendichtringes verbunden sein, wodurch der genannte Bereich trotz einer in sich relativ steifen Ausbildung radialen Bewegungen der abgedichteten Welle leicht zu folgen vermag.

Die radiale Tiefe der Zwischenräume der Staurippen ist relativ klein bemessen und beträgt etwa 0,1 bis 0,5 mm. Die in Zwischenräumen dieser kleinen Dimensionierung vorhandenen Kapillarkräfte sind ausreichend, um bei Wellenstillstand stets eine vollständige Auffüllung der Zwischenräume mit dem abgedichteten Medium zu gewährleisten, beispielsweise mit Schmieröl. Hierdurch ist eine gute Schmierung der dynamisch belasteten Abdichtungszone der Dichtleiste gewährleistet, was in bezug auf die Erzielung eines günstigen Verschleissbildes von grosser Bedeutung ist, wenn Stillstand und Drehung der abgedichteten Welle häufig einander abwechseln.

Das in den Zwischenräumen der Staurippen bei Wellenstillstand enthaltene Schmiermittel haftet zugleich an der Oberfläche der abgedichteten Welle an und wird durch diese mit zunehmender Geschwindigkeit verstärkt in den sich in Drehrichtung verengenden Spalt zwischen der Mantelfläche der Welle und den Anströmflächen eingepresst. Die Anströmflächen sind als ein Bestandteil der Staurippen gleichmässig auf dem Umfang der Dichtlippe verteilt. Das Einpressen des abgedichteten Mediums in den Spalt zwischen den Anströmflächen und der abgedichteten Welle bewirkt dadurch parallel zur ansteigenden Drehgeschwindigkeit der Welle zunächst eine Verminderung der Anpressung der Dichtlippe und schliesslich das in bezug auf die Erzielung verschleissfreien Laufes erwünschte Abheben der Dichtlippe. Die Abdichtung beruht anschliessend auf rein dynamischen Effekten, insbesondere auf der hydrodynamischen Rückförderung von Leckflüssigkeit durch die auf der druckabgewandten Seite der Dichtleiste angeordneten Rückförderrippen. Diese haben bei Wellenstillstand keine Dichtfunktion.

Die Anströmflächen können innenseitig in einer gedachten Kegelfläche enden, die die Welle rotationssymmetrisch umschliesst und die einen sich in Richtung des abgedichteten Mediums erweiternden Durchmesser aufweist. Staurippen mit entsprechend begrenzten Anströmflächen lassen sich besonders leicht entformen und dementsprechend einfach herstellen. Sie gewährleisten darüber hinaus bei einer optimalen Aussteifung des die Dichtleiste und die Staurippen in axialer Richtung umschliessenden Bereiches eine gute Nutzbarmachung der dynamischen Kräfte des abgedichteten Mediums bei sich drehender Welle.

Nach einer anderen Ausgestaltung ist es vorgesehen, dass den Anströmflächen zur Erzielung einer richtungsneutralen Wirksamkeit auf der Rückseite der Staurippen weitere Anströmflächen spiegelbildlich zugeordnet sind. Eine entsprechend ausgebildete Dichtung weist unabhängig von der Drehrichtung der abgedichteten Welle immer eine gute Wirksamkeit auf. Sie ist daher universell verwendbar.

Eine beispielhafte Ausführung des erfindungsgemäss vorgeschlagenen Radialwellendichtringes ist in der in der Anlage beigefügten Zeichnung in halbgeschnittener Darstellung wiedergegeben.

Der gezeigte Radialwellendichtring umfasst eine ringförmig ausgebildete Dichtlippe 3, die in dem aus zwei Winkelringen 1, 2 bestehenden Aussengehäuse flüssigkeitsdicht und verdrehsicher festgelegt ist. Die ringförmige Dichtlippe 3 ist im Bereich ihres Innendurchmessers in Richtung des abgedichteten Mediums abgekröpft und liegt bei Wellenstillstand entlang eine relativ grossen axialen Erstreckung an der Oberfläche der abgedichteten Welle an. Die die statische Abdichtung bewirkende Dichtleiste 5 ist ringförmig ausgebildet und berührt die Oberfläche der abgedichteten Welle mit einem durchgehenden Dichtband. Auf der dem abgedichteten Medium zugewandten Seite der Dichtleiste 5 ist der Innendurchmesser der Dichtlippe zu einer Zylinderfläche erweitert, aus der in Richtung der Oberfläche der Welle vorspringende Staurippen 6 angeordnet sind.

Diese schliessen mit der Mantelfläche der abgedichteten Welle einen spitzen Winkel ein und erstrecken sich im übrigen achsparallel. Auf der von dem abgedichteten Medium abgewandten Seite schliessen sich an die Dichtleiste hydrodynamisch wirkende Rückförderelemente 4 an, bestehend aus drei ineinanderliegenden Gewindegängen, die bei sich drehender Welle eine hydrodynamische Förderwirkung auf Leckflüssigkeit in Richtung des abgedichteten Raumes ausüben.

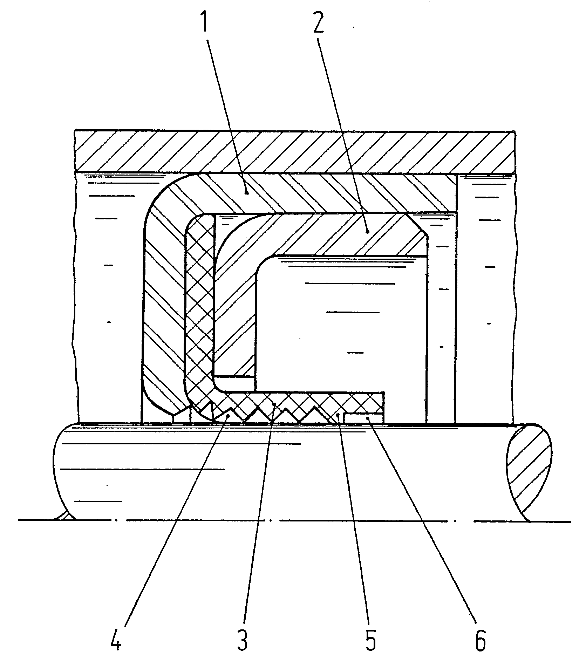

### Patentansprüche

1. Radialwellendichtring, umfassend eine ringförmige Dichtlippe (3) aus polymerem Werkstoff, die mit einer umlaufenden Dichtleiste (5) an der Welle anliegt, hydrodynamisch wirkende Rückförderrippen (4) auf der druckabgewandten Seite der Dichtleiste und einen innenseitig zylindrisch begrenzten Ringvorsprung auf der dem abgedichteten Medium zugewandten Seite sowie einen radialen Abstand zwischen der Innenseite des Ringvorsprunges und der Welle, wobei der Ringvorsprung biegesteif mit der Dichtleiste (5) verbunden ist, wobei aus der Innenseite des Ringvorsprunges gleichmässig auf dem Umfang verteilte Staurippen (6) mit Anströmflächen für das abgedichtete Medium vorspringen, wobei die Anströmflächen quer zur Rotationsachse der Welle betrachtet, einen spitzen Winkel mit der Mantelfläche einschliessen und wobei der spitze Winkel so geneigt ist, dass zwischen den Anströmflächen und der Welle ein sich in Drehrichtung verengender Spalt entsteht, dadurch gekennzeichnet, dass die Anströmflächen, in Richtung der Welle betrachtet, sich parallel zu dieser erstrecken und frei von Hinterschneidungen sind und dass der radiale Abstand des Ringvorsprunges von der Welle etwa 0,1 bis 0,5 mm beträgt.

2. Radialwellendichtring nach Anspruch 1, dadurch gekennzeichnet, dass die Anströmflächen auf der der Welle zugewandten Seite in einer gedachten Kegelfläche enden, die einen sich in Richtung des abgedichteten Mediums erweiternden Durchmesser aufweist.

3. Radialwellendichtring nach Anspruch 1 bis 2, dadurch gekennzeichnet, dass den Anströmflächen zur Erzielung einer richtungsneutralen Wirksamkeit auf der Rückseite der Staurippen weitere Anströmflächen spiegelbildlich zugeordnet sind.

### Revendications

1. Joint d'étanchéité de type radial comprenant une lèvre d'étanchéité annulaire (3) en matériau polymère qui appuie sur l'arbre par une bande d'étanchéité périphérique (5), des nervures de renvoi (4) à effet hydrodynamique sur le côté de la bande d'étanchéité opposé à la pression et une saillie annulaire limitée en forme de cylindre du côté intérieur sur le côté tourné vers le fluide à contenir ainsi qu'un intervalle radial entre la face intérieure de la saillie annulaire et l'arbre, tandis que la saillie annulaire est assemblée à la bande d'étanchéité (5), sans possibilité de flexion, que des nervures d'arrêt (6), réparties uniformément sur la périphérie se dressent sur la face intérieure de la saillie annulaire avec des surfaces de contact pour le fluide à contenir, que les surfaces de contact forment un angle aigu avec la surface cylindrique de l'arbre quand on les considère transversalement par rapport à l'axe de rotation de celui-ci et que l'angle aigu est tel qu'il existe un jeu qui se rétrécit dans le sens de rotation entre les surfaces de contact et l'arbre, caractérisé en ce que les surfaces de contact, considérées en direction de l'arbre, sont disposées parallèlement à celui-ci et sont exemptes de contre-dépouille et en ce que la distance radiale entre la saillie annulaire et l'arbre est d'environ 0,1 à 0,5 mm.

2. Joint d'étanchéité de type radial selon la revendication 1, caractérisé en ce que les surfaces de contact sur la face tournée vers l'arbre se terminent par une surface conique imaginaire, qui présente un diamètre augmentant en direction du fluide à contenir.

3. Joint d'étanchéité de type radial selon les revendications 1 et 2, caractérisé en ce que d'autres surfaces de contact sont disposées sur la face postérieure des nervures d'arrêt, symétriquement par rapport aux premières surfaces de contact et afin d'obtenir une efficacité indépendante du sens de rotation.

### Claims

1. A radial shaft sealing ring, comprising an annular sealing lip (3) of polymeric material, which rests with a peripheral sealing strip (5) against the shaft, hydrodynamically acting return ribs (4) on the side of the sealing strip facing away from the pressure and an annular projection which is limited cylindrically on the inside on the side facing the sealed-off medium, as well as a radial distance between the inside of the annular projection and the shaft, the annular projection being connected flexurally rigidly to the sealing strip (5), baffle ribs (6) projecting from the inside of the annular projection evenly distributed around its periphery and with flow faces for the sealed-off medium, the flow faces forming an acute angle with the generated surface, when considered transversely to the axis of rotation of the shaft, and the acute angle being inclined in such a way that a gap narrowing in the direction of rotation is produced between the flow faces and the shaft, characterised in that, when considered in the direction of the shaft, the flow faces extend parallel to the latter and are free from undercuts and that the radial distance of the annular projections from the shaft is about 0.1 to 0.5 mm.

2. A radial shaft sealing ring according to claim 1, characterised in that the flow faces on the side facing the shaft end in an imaginary conical surface which has a diameter widening in the direction of the sealed-off medium.

3. A radial shaft sealing ring according to claim 1 or 2, characterised in that, to achieve a directionally neutral activity, further flow faces are correlated with the flow faces in mirror-image fashion on the back of the baffle ribs.

1/1